(19) **Europäisches Patentamt**
**European Patent Office**
**Office européen des brevets**

(11) **EP 4 134 855 B1**

(12) **EUROPEAN PATENT SPECIFICATION**

(45) Date of publication and mention
of the grant of the patent:
**21.05.2025 Bulletin 2025/21**

(21) Application number: **22177027.4**

(22) Date of filing: **02.06.2022**

(51) International Patent Classification (IPC):
**G06F 21/64** (2013.01)

(52) Cooperative Patent Classification (CPC):
**G06F 21/64**

(54) **BLOCKCHAIN BASED LAYER 2 APPLICATION FOR DELEGATED OFF-CHAIN PAYMENTS USING CRYPTOCURRENCIES**

BLOCKCHAIN-BASIERTE LAYER-2-ANWENDUNG FÜR DELEGIERTE OFF-CHAIN-ZAHLUNGEN UNTER VERWENDUNG VON KRYPTOWÄHRUNGEN

APPLICATION DE COUCHE 2 À BASE DE CHAÎNES DE BLOCS POUR LES PAIEMENTS HORS CHAÎNE DÉLÉGUÉS UTILISANT DES CRYPTO-MONNAIES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.08.2021 US 202163232669 P**
**18.10.2021 US 202117503388**

(43) Date of publication of application:
**15.02.2023 Bulletin 2023/07**

(73) Proprietor: NEC Corporation
Minato-ku
Tokyo 108-8001 (JP)

(72) Inventors:
• **Andreina, Sébastien**
69115 Heidelberg (DE)
• **Schwarz, Maja**
69115 Heidelberg (DE)
• **Karame, Ghassan**
69115 Heidelberg (DE)

(74) Representative: **Ullrich & Naumann PartG mbB**
Schneidmühlstrasse 21
69115 Heidelberg (DE)

(56) References cited:

• **DAS POULAMI ET AL: "FASTKITTEN: Practical Smart Contracts on Bitcoin", USENIX SECURITY SYMPOSIUM, 14 August 2019 (2019-08-14), XP055982178, Retrieved from the Internet <URL:https://www.usenix.org/system/files/ sec19fall_das_prepub.pdf> [retrieved on 20221116]**

• **DZIEMBOWSKI STEFAN S DZIEMBOWSKI@CRYPTO EDU PL ET AL: "General State Channel Networks", PROCEEDINGS OF THE 2018 IEEE/ACM INTERNATIONAL CONFERENCE ON CONNECTED HEALTH: APPLICATIONS, SYSTEMS AND ENGINEERING TECHNOLOGIES, ACMPUB27, NEW YORK, NY, USA, 15 October 2018 (2018-10-15), pages 949 - 966, XP058701176, ISBN: 978-1-4503-6120-0, DOI: 10.1145/ 3243734.3243856**

• **WÜST KARL ET AL: "Bitcontracts: Supporting Smart Contracts in Legacy Blockchains", NDSS 2021, 21 February 2021 (2021-02-21), XP055982207, Retrieved from the Internet <URL:https://eprint.iacr.org/2019/857.pdf> [retrieved on 20221116]**

• **ZHANG FAN ET AL: "The Ekiden Platform for Confidentiality-Preserving, Trustworthy, and Performant Smart Contracts", SECURITY & PRIVACY, IEEE, IEEE SERVICE CENTER, LOS ALAMITOS, CA, US, vol. 18, no. 3, 23 March 2020 (2020-03-23), pages 17 - 27, XP011788203, ISSN: 1540-7993, [retrieved on 20200511], DOI: 10.1109/ MSEC.2020.2976984**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

The present invention relates to a method, system and computer-readable medium for a blockchain based, layer 2 application for delegated off-chain payments using cryptocurrencies.

BACKGROUND

While cryptocurrencies remain the most common use case for blockchain, they are mainly suitable for public and permissionless blockchains. A variety of more complex use cases can be readily implemented via private blockchains. However, private blockchains lack a default currency. Therefore, while creating a private blockchain is straightforward, it is not as easy to ensure their worth. Documents Das Poulami et al., "FASTKITTEN: Practical Smart Contracts on Bitcoin", USENIX security symposium, 14 August 2019; Dziembowski Stefan et al., "General State Channel Networks", IEEE/ACM intl. conference on connected health, October 2018; Wüst Karl et al., "Bitcontracts: Supporting Smart Contracts in Legacy Blockchains",NDSS February 2021 constitute relevant prior art.

SUMMARY

The invention is defined by the appended independent claims. Preferred embodiments are set out in the dependent claims.

In an embodiment, the present disclosure provides a method for securing a cryptocurrency transaction on a permissioned blockchain. The cryptocurrency transaction involves cryptocurrencies of a permissionless public blockchain. The method includes receiving a join request including a transaction identification. The transaction identification identifies an enroll transaction involving a public smart contract deployed on the permissionless public blockchain, the enroll transaction identifying a permissioned blockchain public key being valid on the permissioned blockchain and transferring a cryptocurrency balance to the public smart contract. The method further includes verifying that the enroll transaction was properly executed, crediting an account corresponding to the permissioned blockchain public key with the cryptocurrency balance, and receiving a send request identifying a second cryptocurrency balance and a second permissioned blockchain public key being valid on the permissioned blockchain. In addition, the method includes transferring the second cryptocurrency balance from the account corresponding to the permissioned blockchain public key to a second account corresponding to the second permissioned blockchain public key.

BRIEF DESCRIPTION OF THE DRAWINGS

Subject matter of the present disclosure will be described in even greater detail below based on the exemplary figures. All features described and/or illustrated herein can be used alone or combined in different combinations. The features and advantages of various embodiments will become apparent by reading the following detailed description with reference to the attached drawings, which illustrate the following:

FIG. 1 illustrates a workflow according to the present disclosure;

FIG. 2 illustrates a method, implemented by a permissioned private blockchain, for conducting delegated off-chain payments using cryptocurrencies of a permissionless public blockchain; and

FIG. 3 illustrates a processing system.

DETAILED DESCRIPTION

The present inventors have recognized that private blockchains would benefit from having the possibility of dealing directly with existing cryptocurrencies and to use existing cryptocurrencies to pay for or exchange services inside the private blockchain without requiring, in each instance, a transaction with an existing cryptocurrency.

The present disclosure provides a mechanism that enables the use of coins from public cryptocurrencies for transactions on a private blockchain. Such mechanism provides higher efficiency and lower latency for users, while enabling secure payment on an existing private blockchain.

The present disclosure provides a fully-automated mechanism of transferring tokens between blockchains, which is absent from the state of the art (e.g., those based on custody services). In contrast to state of the art solutions-which require reliance on un-trusted third parties, the fully-automated mechanism provided by the present disclosure for transferring tokens between blockchains also maintains the trust and security benefits of blockchain-based solutions. Apart from the present disclosure, there are no other known solutions that allow a permissioned (i.e. private) blockchain to spend actual currency hosted on another permissionless (i.e. public) blockchain.

The transfer of tokens from a private blockchain to a public blockchain, as provided by the present disclosure, utilizes Byzantine Fault Tolerant (BFT) proofs-and verification of the validity of such proofs-to ensure that the transfer of tokens between the blockchains adheres to strict security requirements. In this manner, the present disclosure improves the security with which inter-blockchain transfers of cryptocurrency ownership can be executed. Furthermore, by utilizing consensus protocols of a permissioned, private blockchain to generate such BFT proofs, the present disclosure reduces latency associated with inter-blockchain transfers of cryptocurrency ownership and can thereby increase the throughput of cryptocurrency-based transactions. In particular, by enabling intra-blockchain transfers, on a private blockchain, of public blockchain cryptocurrencies, the subject matter of the present disclosure provides for transfer of public blockchain cryptocurrencies with increased throughput, lower latency, and at lower cost than transferring such cryptocurrencies directly on a public blockchain. Therefore, the present disclosure enhances both the functionality and security of blockchain transactions-particularly transactions that involve multiple different blockchains.

According to aspects of the present disclosure, coins of existing cryptocurrencies can be securely exported to a private blockchain, thereby enabling users of the private blockchain to transact using the coins of the existing cryptocurrencies without sending the transactions to the cryptocurrency blockchain for verification. Unlike off-chain side-channel payments (such as Lightning Network for bitcoin), in present disclosure, payments are not limited to channels (e.g., between only 2 participants). Instead, aspects of the present disclosure allow all of the participants of the private blockchain to transact together. An advantage of aspects of the present disclosure is that the coins used keep their worth because participants are allowed at any time to "cash-out" and retrieve their coins on the original cryptocurrency blockchain.

A further embodiment could envision a lending use case in which a cryptocurrency loan is secured with collateral in the form of tokens. A borrower could provide tokens, such as tokens representing (fractional) ownership in fine art, as a guarantee that the loan will be paid back. In this case the tokens are issued on a permissioned blockchain, while the cryptocurrency loan is given on a permissionless blockchain on which the cryptocurrency issued. A smart contract on the permissioned blockchain and another one on the permissionless blockchain can then use the protocol described in this application to manage the loan and collateral. The smart contract on the permissioned blockchain is used to block the tokens provided as the collateral, and the smart contract on the permissionless blockchain checks that the loan payments are transferred and acknowledges when the loan is fully repaid in order to return the tokens to the borrower. In case of a default on loan, the tokens are transferred to the lender by transferring them to the public key that the lender provided on the permissioned blockchain.

The present disclosure provides fast and secure payment on a permissioned (e.g., Byzantine Fault Tolerance (BFT)-based) blockchain using cryptocurrency coins from an existing public blockchain, such as the Ethereum blockchain. According to aspects of the present disclosure, the existing public blockchain supports smart contract. A smart contract is a computer program or transaction protocol that is configured to automatically execute and operate on the blockchain. Specifically, a smart contract is a processor-executable program (code) stored on a non-transitory processor readable medium that, when executed by processor, causes the processor to carry out program functions. The code is available (i.e. can be inspected) to all the members present on the network. A person of ordinary skill in the art would recognize that a "smart contract" is a technical aspect of blockchain networks used for automation, and not a legal instrument or other means of constraining human activity.

Some advantages of the present disclosure include a tremendous reduction in latency (i.e., a few seconds vs hours) and lower fees (because the private chain is not running the expensive proof-of-work but an efficient and secure BFT algorithm) that accompany the execution of transactions on a the private blockchain as compared to the execution of transactions on a public blockchain. Such advantages stem from the use of an efficient and secure BFT algorithm for verifying transactions and establishing consensus on the private chai-as compared to an expensive proof-of-work algorithm used by the public blockchain.

Aspects of the present disclosure utilize: 1) a Simplified Payment Verification (SPV) client; and 2) BFT proofs. In a preferred embodiment of the present disclosure, user funds are locked on the public cryptocurrency blockchain (i.e. the public chain) through a smart contract, and unlocked on the private BFT-based blockchain (i.e. the private chain) to allow users to conduct transactions on the private chain. When a user of the private chain wants to cash out, the user requests a BFT proof that the user is cashing out, and the user can claim the coins back via the smart contract on the public chain.

An SPV client is a lightweight software program able to verify, up to a certain degree of security, that a payment has been made on a public chain based on proof-of-work (PoW) (such public chains include the Bitcoin and Ethereum blockchains, and many others). The SPV client achieves this result without having to download the full history of the blockchain and is therefore suitable for resource-constrained devices (e.g. mobile phones).

The SPV client typically verifies that a payment has been made on the public chain by requesting that multiple nodes of the public chain retrieve information about a transaction having a particular transaction identification (TxID). The nodes then reply with a series of block headers (that are very small) and a proof to show that the transaction with the TxID is included in one of those headers. This can be done by revealing the part of the Merkle tree whose root is stored in the header that contains the transaction. The SPV client requests multiple headers to make sure that the transaction is in a block that is indeed part of the public chain, and not in a block that has been maliciously crafted/removed from the public chain due to a fork.

The method implemented by the SPV client for verification of a transaction is secure as long as the adversary cannot break the Merkle tree security (which relies on hash function hardness) and is not able to produce sufficiently many block headers rapidly. Those assumptions are fair because they are consistent with the assumptions upon which PoW blockchains are based. Specifically, if an adversary could break the hash function used, then the whole PoW blockchain ecosystem would be broken, and if the adversary could generate sufficiently many block headers, then the adversary would possess more mining power than the majority, which goes against the assumptions of PoW blockchains.

A Byzantine Fault Tolerance (BFT) proof is a proof that shows that a quorum of nodes running a BFT algorithm agrees on some value/truth. The quorum can be, for example, a simple majority (i.e. more than n/2 nodes) or a super majority (i.e. at least 2/3 nodes). Agreement by a quorum of nodes can be demonstrated by collecting a number, required for the quorum, of signatures over the statement to agree on, where each respective node agrees to sign only if the statement is evaluated, locally by the respective node, to true. Verifying a BFT proof requires access to the configuration information of the BFT setup, such as the number of potentially malicious nodes, the total number of nodes, and their public keys. A proof can be written as:

$$\pi < [statement\ arguments], quorum\ signature >.$$

Aspects of the present disclosure use a private blockchain-which provides advantages such as low transaction costs and high throughput/low latency-to execute transactions in an existing cryptocurrency. Aspects of the present disclosure can be seen as layer-2 solutions using a blockchain, that enable high efficiency trading between users of assets generated and held on another (less efficient/slower) blockchain.

Aspects of the present disclosure include two main functions for interactions between a private chain and a public chain: 1) *enroll*, which will transfer coins held by a user on the public chain to the private chain; and 2) *cash out*, which will transfer all coins held by the user on the private chain back to the public chain handling the cryptocurrency.

According to aspects of the present disclosure, an architecture is provided with one (or multiple) public cryptocurrency blockchain(s) that support generic smart contracts, and one private blockchain. The public cryptocurrency blockchain is defined as $B_c$, and the private blockchain is defined as $B_p$. The public chain $B_c$ has a default coin $c$ and provides support for smart contracts $s$. The public chain $B_c$ provides an SPV client that is able to verify transactions on the public chain $B_c$ without downloading the full public chain.

In an embodiment, a smart contract is instantiated on both the public chain and the private chain: a public smart contract $s_c$ on the public blockchain $B_c$ and a private smart contract $s_p$ on the private blockchain $B_p$. The public smart contract $s_c$ is used to facilitate the technical transfer of coins $c$ between the public chain $B_c$ and the private chain $B_p$, while the private smart contract $s_p$ provides all the normal asset exchange functions on the private chain $B_p$. For security reasons, the private smart contract $s_p$ on the private blockchain $B_p$ creates the deploy transaction of the public smart contract $s_c$ on the public chain $B_c$ and will only accept *Enroll* transactions that are sent to the public smart contract $s_c$. This ensures that the coins sent to the public smart contract $s_c$ are handled as expected.

The public smart contract $s_c$ provides only the following two functions:

1. *Enroll*(X *coins, key*)

2. *Cashout*($\pi$)

The *Enroll* function takes as input some *coins* and a public key $key_p$. The key $key_p$ is a valid public key on the private chain $B_p$ and does not need to be valid on the public chain $B_c$. The *Enroll* function adds the X *coins* taken as input to the account of the smart contract $s_c$. After the *Enroll* step, the original owner of the *coins* on the public chain $B_c$ cannot take back ownership of the *coins* on the public chain $B_c$ without a proof $\pi$ from the private chain $B_p$.

A call to *Cashout*($\pi$) with a valid proof will return coins held by the smart contract $s_c$ to an address of a public key $key_c$ (i.e. a valid public key on the public chain $B_p$) encoded inside the proof $\pi$-which is a BFT-proof as defined herein. The proof $\pi$ contains an amount of *coins* to withdraw from the smart contract $s_c$, the public key $key_c$ to which the coins should go and last, the BFT-proof that the information is correct.

The *Cashout* function is the only way to transfer coins from the public smart contract $s_c$. And, without a proper BFT proof, it is not possible to transfer coins from the public smart contract $s_c$ to another address on the public chain $B_c$.

The private smart contract $s_p$ provides virtualized coins on the private chain $B_p$ that represent *coins* of the existing cryptocurrency on the public chain $B_c$. The virtualized coins on the private chain $B_p$ are backed by actual *coins* of the existing cryptocurrency held by the public smart contract $s_c$ on the public chain $B_c$. This enables permissioned users of the private chain $B_p$ to transact, with low fees and latency on the private chain $B_p$, in *coins* on the public chain $B_c$. The private smart contract also enables permissioned users of the private chain $B_p$ to as exchange *coins$_1$* on a first public chain $B_{c1}$ for *coins$_2$* on a second public chain $B_{c2}$. The private smart contract $s_p$ therefore keeps track, on the private chain $B_p$, of the amount and type of coins/assets owned by each permissioned user of the private chain $B_p$.

The private smart contract $s_p$ provides at least the following 3 functions:

1. *join(TxID)*

2. *Quit(key)*

3. *Send(Coins, key)*

The first function *Join* takes as input a transaction identification *TxID* of the *Enroll* transaction on the $B_c$. The private smart contract $s_p$ will then run the SPV client to verify the validity of the *Enroll* transaction. If the SPV confirms the *Enroll* transaction, the private smart contract $s_p$ credits *X coins* to the public key *key$_p$* on the private chain $B_p$ (where the *X coins* and the public key *key$_p$* on the private chain $B_p$ were provided as inputs to the *Enroll* transaction).

The *Quit(key)* function simply deletes the account of the public key *key$_p$* on the private chain $B_p$ and creates a BFT proof $\pi$ that the coins currently held by the public key *key$_p$* on the private chain $B_p$ should be sent to the public key *key$_c$* on the public chain $B_c$.

The *Send(coins, key)* function enables transactions between different permissioned users of the private chain $B_p$. The function *Send* takes as input some *coins* and a public key *key$_p$* and credits the *coins* to the public key *key$_p$* on the private chain $B_p$.

An embodiment of the present disclosure provides a method for carrying out cryptocurrency transactions on a permissioned blockchain. The cryptocurrency transactions involving cryptocurrencies of a permissionless public blockchain. The method includes instantiating a private smart contract on the permissioned blockchain and receiving, by the private smart contract, a join request including a transaction identification. The transaction identification identifies an enroll transaction involving a public smart contract deployed on the permissionless public blockchain. The enroll transaction identifies a permissioned blockchain public key being valid on the permissioned blockchain and transfers a cryptocurrency balance to the public smart contract. The method further includes verifying, by the private smart contract, that the enroll transaction was properly executed, crediting, by the private smart contract, an account corresponding to the permissioned blockchain public key with the cryptocurrency balance, and receiving, by the private smart contract, a send request. The send request identifies a second cryptocurrency balance and a second permissioned blockchain public key being valid on the permissioned blockchain. The method additionally includes transferring, by the private smart contract, the second cryptocurrency balance from the account corresponding to the permissioned blockchain public key to a second account corresponding to the second permissioned blockchain public key. The private smart contract is set of processor-executable program stored on a non-transitory processor readable medium that, when executed by processor, causes the processor to carry out program functions.

The method can further include deploying, by the permissioned blockchain, the public smart contract in the permissionless public blockchain. The method can also additionally include receiving, by the private smart contract, a withdraw request identifying a permissionless blockchain public key, the withdraw request including a signature using a secret key of a public-private key pair corresponding to the second permissioned blockchain public key, and computing, by the permissioned blockchain, a proof including a third cryptocurrency balance, the permissionless blockchain public key, and a signature of a valid quorum of nodes of the permissioned blockchain.

The proof can be a Byzantine fault tolerance (BFT) proof and the public smart contract can be configured to evaluate the validity of the BFT proof. The method can additionally include transmitting, by the private smart contract to the public smart contract, BFT configuration parameters, the BFT configuration parameters being used by the public smart contract to evaluate the validity of the BFT proof. The method can further include updating, by the private smart contract, the BFT configuration parameters in response to an increase or decrease in a total number of nodes of the permissioned blockchain and/or a number of nodes of the permissioned blockchain required for a quorum. Updating the BFT configuration parameters can include transmitting, by the private smart contract to the public smart contract, a cryptographic accumulator that includes a set of currently valid keys of all nodes of the permissioned blockchain, wherein the cryptographic accumulator is signed by a valid quorum of nodes of a previous configuration of the permissioned blockchain.

The verifying, by the private smart contract, that the enroll transaction was properly executed can include invoking a simplified payment verification (SPV) client to retrieve information corresponding to the transaction identification. The SPV client is configured to request, from each of multiple public nodes of the permissionless public blockchain, a block header and a proof that the enroll transaction is included in the block header.

The enroll transaction can include a signature using a secret key of a public-private key pair corresponding to a permissionless blockchain public key corresponding to an account from which the cryptocurrency balance is transferred to the smart contract, and the transaction identification can be a hash of the enroll transaction.

The join request can include a signature using a secret key of a public-private key pair corresponding to the permissioned blockchain public key. The send request can also include a signature using a secret key of a public-private key pair corresponding to the permissioned blockchain public key.

A further embodiment of the present disclosure provides a non-transitory processor readable medium having stored thereon processor executable instructions for carrying out a method for executing cryptocurrency transactions on a permissioned blockchain. The cryptocurrency transactions involve cryptocurrencies of a permissionless public blockchain. The method includes instantiating a private smart contract on the permissioned blockchain and receiving, by the private smart contract, a join request including a transaction identification. The transaction identification identifies an enroll transaction involving a public smart contract deployed on the permissionless public blockchain. The enroll transaction identifies a permissioned blockchain public key being valid on the permissioned blockchain and transfers a cryptocurrency balance to the public smart contract. The method further includes verifying, by the private smart contract, that the enroll transaction was properly executed, crediting, by the private smart contract, an account corresponding to the permissioned blockchain public key with the cryptocurrency balance, and receiving, by the private smart contract, a send request. The send request identifies a second cryptocurrency balance and a second permissioned blockchain public key being valid on the permissioned blockchain. The method additionally includes transferring, by the private smart contract, the second cryptocurrency balance from the account corresponding to the permissioned blockchain public key to a second account corresponding to the second permissioned blockchain public key.

An additional embodiment of the present disclosure provides a system for carrying out cryptocurrency transactions on a permissioned blockchain. The cryptocurrency transactions involving cryptocurrencies of a permissionless public blockchain. The system includes processor circuitry configured to instantiate a private smart contract on the permissioned blockchain and execute the private smart contract. The private smart contract is configured to receive a join request including a transaction identification. The transaction identification identifies an enroll transaction involving a public smart contract deployed on the permissionless public blockchain, the enroll transaction identifying a permissioned blockchain public key being valid on the permissioned blockchain and transferring a cryptocurrency balance to the public smart contract. The private smart contract is further configured to verify that the enroll transaction was properly executed, credit an account corresponding to the permissioned blockchain public key with the cryptocurrency balance, and receive a send request identifying a second cryptocurrency balance and a second permissioned blockchain public key being valid on the permissioned blockchain. The private smart contract is also configured to transfer the second cryptocurrency balance from the account corresponding to the permissioned blockchain public key to a second account corresponding to the second permissioned blockchain public key.

An embodiment of the present disclosure provides a method comprising one or more of the following operations:

    1. a setup operation, comprising:

        a. deploying a smart contract $S_c$ on a blockchain $B_c$ with a native cryptocurrency, and a contract $S_p$ on a private/permissioned blockchain $B_p$

    2. a join $B_p$ operation, comprising:

        a. $B_p$ receiving a registration request to enroll user with public key $Pk$

        b. $S_c$ receiving an *Enroll* transaction containing some coins and a target public key where the coins should be transferred to on $B_p$

        c. $S_p$ receiving a *Join* transaction containing the transaction ID of an *Enroll* transaction on the blockchain $B_c$.

        d. $S_p$ using an SPV client to verify the transaction with ID as provided in the *Join* call, and, upon successful verification, crediting coins to the key provided in the *Enroll* transaction

    3. a normal operation, comprising:

        a. $S_p$ receiving *Send* transactions that send coins from one account on $B_p$ to another

4. a cash-out operation, comprising:

    a. $S_p$ receiving a *Quit* transaction that aims at terminating the account of the caller on $B_p$ and sending the coins back on $B_c$

    b. $B_p$ generating a proof $\pi$ containing the number of coins owned by the caller and the target key that should receive the coins on $B_c$

    c. $S_c$ receiving the proof $\pi$, verifying it, and, if successful, crediting the number of coins specified in the proof to the public key similarly specified in the proof

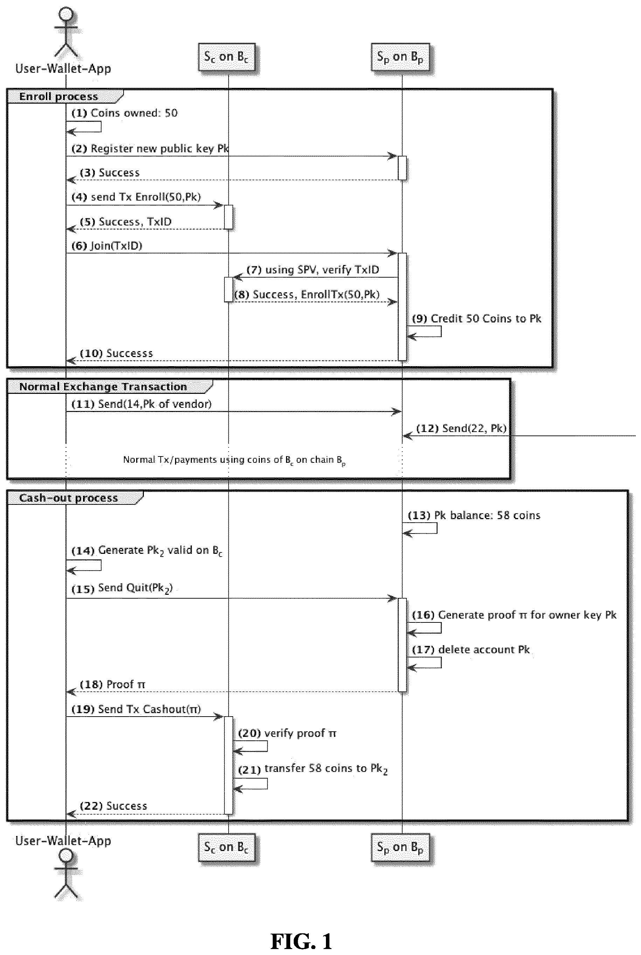

A workflow depicting an embodiment of the present disclosure is depicted in FIG. 1. The workflow includes the following:

1. A User-Wallet-App (i.e. user) first possesses a number of coins (e.g. 50) on the public chain $B_c$. Those coins are linked to a public key $Pk_{B_c}$ with a matching secret key $Sk_{B_c}$.

2.-3. The user then registers a new public key $Pk_{B_p}$ (i.e. *Pk*) that is valid on the private chain $B_p$ and generates a matching secret key $Sk_{B_p}$ (i.e. *Sk*) to form a form a public-private pair $Pk_{B_p}/Sk_{B_p}$ that is valid on the private chain $B_p$. Since the private chain $B_p$ is a permissioned chain, the user registers the key on the private chain $B_p$ first.

4. The user then initiates a new enroll transaction on the public chain $B_c$ with the following information:

$$Tx < s_c, Enroll, 50, Pk_{B_p}, sig_{Sk_{B_c}} >$$

Where $s_c$ is the public smart contract to invoke, *Enroll* is the function to invoke on this smart contract, with the parameters 50 and $Pk_{B_p}$, respectively being the number of coins to invoke and the public key they will be linked to. Finally, $sig_{Sk_{B_c}}$ is the signature over all the previous field using the secret key $Sk_{B_c}$.

5. The public smart contract $s_c$, after verifying that the transaction syntax and signature are correct, adds the number of coins invoked in the *Enroll* transaction to a single account (that sums the coins of all the users that implemented the *Enroll* function to transfer coins to the public smart contract $s_c$). It then successfully returns. The (e.g., mobile) app then retrieves the TxID as being *Hash*(*Tx*).

6. The user then sends a *Join* transaction using the TxID as a parameter to the private chain $B_p$:

$$Tx < s_p, Join, TxID, sig_{Sk_{B_p}} >$$

Where $s_p$ is the private smart contract to invoke and *Join* is the function to invoke on this smart contract with a single parameter *TxID*. Finally, $sig_{Sk_{B_p}}$ is the signature over the previous fields using the secret key $Sk_{B_p}$.

7.-8. Using the SPV client, the private smart contract $s_p$ verifies that the *Enroll* transaction with the transaction identification *TxID* has been properly included in the public chain $B_c$ and retrieves the fields *"X coins"* and *"key"* of the *Enroll* transaction.

9. The private smart contract $s_p$ adds the *X coins* (here, 50) to the public key $Pk_{B_p}$ as written in the *Enroll* transaction.

10. The enroll process is successful and the coins were transferred, on the public chain $B_c$, to the public smart contract $s_c$ that corresponds to the private chain $B_p$. Until a user calls the *Quit* and *Cashout* transactions, the public smart contract $s_c$ will store the coins securely without allowing anyone to withdraw them, as it only allows withdrawals through proofs $\pi$ from the private chain $B_p$.

11.-12. Users can exchange coins on the private chain $B_p$ through normal *send*() transactions. Users now benefits from low fees and quick processing.

13. The balance added at 9 is linked to the public key $Pk_{B_p}$ (e.g., the balance is 58 coins).

14. The user self-generates a new public key $Pk_{BC2}$ (i.e. $Pk_2$) with a matching secret key $Sk_{BC2}$ (i.e. $Sk_2$) that are valid on the public chain $B_c$ or some other public chain $B_{c2}$. Here, the user does not need to enroll the public key as $B_c$ (or $B_{c2}$) is an open/public blockchain. Where the user generates the new public key $Pk_{B_{C2}}$ with the matching secret key $Sk_{B_{c2}}$ that are valid on another public chain $B_{c2}$, the user can transfer coins held on a first public chain, i.e. $B_c$, to the public smart contract $s_c$ on the first public chain (as described at 1-10 above), transact on the private chain $B_p$ to exchange the coins held on the first public chain for coins held on the other public chain $B_{c2}$ (as described at 11-12 above), and then provide a new public/private key pair $Pk_{B_{C2}}/Sk_{B_{C2}}$ on the other public chain $B_{c2}$ that can be used to withdraw the newly acquired coins of the second cryptocurrency from a second public smart contract $s_{c2}$ on the second public chain $B_{c2}$ (in an analogous manner to that described at 15-22 below). The private smart contract $s_p$ can interact with the second public smart contract $s_{c2}$ on the second public chain $B_{c2}$ in the same manner that the private smart contract $s_p$ interacts with the public smart contract $s_c$ on the public chain $B_c$ (as described at 15-22 below).

15. The user sends a *quit* transaction to the private chain $B_p$:

$$Tx < s_p, quit, Pk_2, sig_{Sk} >$$

Where $s_p$ is the private smart contract to invoke, *quit* is the function to invoke on this private smart contract, $Pk_{B_{C2}}$ is the single parameter that is used to inform where the coins should be sent, and finally, the signature $sig_{Sk_{Bc2}}$ over the previous field using the secret key $Sk_{B_{C2}}$. As an alternative, the user can also use the public key $Pk_{B_c}$ with a matching secret key $Sk_{B_c}$ as the parameter used to inform where the coins should be sent and for the signature.

16. The private chain $B_p$ generates the proof $\pi$ with the following information:

$$\pi < Quit, nCoins, targetKey, sig_{quorum} >$$

Where *Quit* is the action being performed, *nCoins* is the number of coins previously owned by the key $Pk_{B_p}$ (i.e. 58 in this example), *targetKey* is the key where the coins should be sent ($Pk_{B_{c2}}$ or $Pk_{B_c}$ in our example), and $sig_{quorum}$ is the signature over the previous fields by a valid quorum of the private chain $B_p$ as explained herein.

17. Since the user wants to withdraw the coins on the public chain $B_c$ or $B_{c2}$, the account on $B_p$ is terminated and deleted. Alternatively, where the private smart contract $s_p$ allows a further function, e.g. *Withdraw(coins, key),* which allows a user to withdraw only a portion of their coin balance (indicated as an input to the *Withdraw* function) on the private chain $B_p$ but otherwise performs the same functions as the *Quit* function, the account on the private chain $B_p$ is not terminated and deleted.

18. The user receives the proof $\pi$.

19. The user sends the *Cashout* transaction to $B_c$:

$$Tx < s_c, Cashout, \pi, sig >$$

Where $s_c$ is the smart contract to invoke, *Cashout* is the function to invoke on this smart contract, $\pi$ is the proof generated by the *Quit* function (or the *Withdraw* function, where provided for by the private smart contract $s_p$) and *sig* is a signature over the previous field. In this case, the key used to sign the transaction does not matter, as it does not influence the evaluation of the transaction by the public smart contract $s_c$. It only needs to provide the fees needed to execute the function in the case the chain $B_c$ (or $B_{c2}$) requires it.

20. The smart contract $s_c$ verifies the proof by checking that the signature represents a quorum.

21. The smart contract $s_c$ finally withdraws the number of coins *nCoins* from its local account and sends it to the key *targetKey.* In our example, this would be 58 coins sent to $Pk_{B_{c2}}$ or $Pk_{B_c}$.

22. Upon successful return, the user has access to the coins directly on the public chain $B_c$ again (or on the public chain $B_{c2}$) and can issue transactions normally on said public chain.

According to embodiments of the present disclosure, different BFT proof instantiations can be utilized, e.g. to account for the need to update BFT proof configuration parameters as a result of new users registering on the private chain $B_p$. In a normal quorum update and verification, the public smart contract $s_c$ is initialized with the existing configuration of the BFT algorithm hardcoded in the contract. Proofs are then verified by ensuring that the number of signatures in $\pi$ form a quorum.

In order to keep the public smart contract $s_c$ updated, every time there is a change in the configuration of the BFT instance (i.e. new node added, node departed, node changed key, etc.), a configuration update is sent to the public smart contract $s_c$ containing a list of *key* to remove from the configuration, and a list of *key* to add. Those configuration updates are signed by a quorum valid according to the old configuration, allowing the public smart contract $s_c$ to be ensured that the updates are valid. The smart contract then keeps track of the currently valid list of peers by removing the keys to remove and adding the keys who joined. Configuration parameters such as total number of nodes ($N$) and minimum quorum size ($Q$) are updated similarly.

An advantage of embodiments of the present disclosure that use normal quorum update and verification is that only minimal trust is required, and higher efficiency is provided, particularly when nodes do not join and leave often.

According to alternative embodiments, an accumulator based quorum update can be implemented. In such a setup, the same configuration as for the "normal quorum update and verification" is kept, except that the configurations are updated using a cryptographic accumulator. Every time some nodes join or leave, a new accumulator containing the set of currently valid keys of all the nodes is created and sent to the public smart contract $s_c$. Similar to the previous configuration update, the accumulator is signed by a valid quorum from the previous configuration.

An advantage of embodiments of the present disclosure using the accumulator-based quorum update is that configuration updates become very cheap as the size of the transaction is constant (regardless of the number of keys changed).

In order to drastically reduce the size of proofs $\pi$ sent to the smart contract $S_c$, a an embodiment of the present disclosure uses a trusted third party to verify proofs off-chain and sign the public smart contract $s_c$ transaction in the case it is correct. In such a case, the public contract $s_c$ is configured to recognize only a private key associated with the public key $Pk_{sgx}$. Since such a third party, if malicious, is able to withdraw all the funds held by the public smart contract $s_c$, proper behavior is enforced by having the key generated by a trusted execution environment (TEE), such as a software guard extension (SGX) enclave, where the key is generated by a secure enclave and the hardware security prevents misbehavior. The enclave then verifies the proofs $\pi$ as described herein, and, if correct, signs the transaction in the stead of the quorum. This aspect drastically simplifies the public smart contract $s_c$ as it now needs to accept transactions from $Pk_{sgx}$ only, without any configuration change. In order to ensure availability and fairness, it is assumed that nodes of the BFT algorithm run an SGX proxy alongside. All the SGX proxies would share a single public key $Pk_{sgx}$, and a secret key $Sk_{sgx}$. This can be achieved by generating the key on one of the SGX enclaves, and then sharing it securely to all the other enclaves.

Here the security relies on the fact that it is hard to extract information from the SGX enclave, and that the enclave was implemented properly. In such a case, the enclave would securely verify that proofs $\pi$ are valid with its knowledge of the BFT configuration and if correct, simply replace the list of signatures in $\pi$ with a single signature using $Sk_{sgx}$.

Embodiments of the present disclosure leverage a simplified payment verification (SPV) mode from within a public smart contract to verify transactions of public blockchains.

Embodiments of the present disclosure exchange configuration updates and proofs of balance and proofs of consensus between a smart contract on a permissioned private chain and a smart contract on a permissionless public chain to free locked coins from the smart contract on the permissionless public chain upon reception of a proof from the permissioned private chain.

Embodiments of the present disclosure improve, e.g., private blockchains without a native currency. Aspects of the present disclosure make it possible to use widely accepted cryptocurrencies and tokens from public blockchains for payments or even other asset transactions in the private blockchain. Aspects of the present disclosure can be exploited in any blockchain use case that includes on-chain payments (which is the case with the majority of use cases). Furthermore, assets that have been tokenized (e.g., on Ethereum) can be transferred in transactions executed on private blockchains.

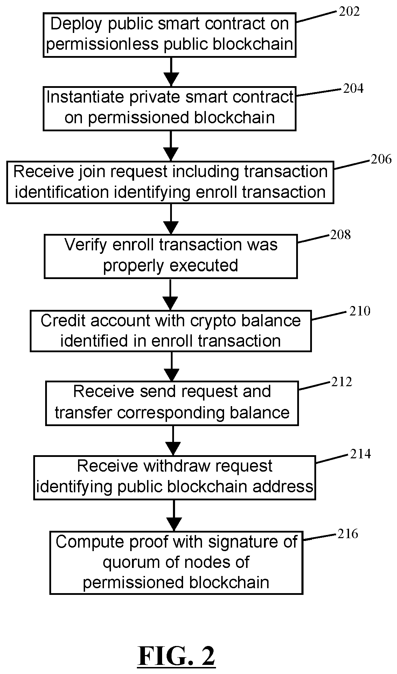

FIG. 2 illustrates a method, implemented by a permissioned private blockchain, for conducting delegated off-chain payments using cryptocurrencies of a permissionless public blockchain. At 202, a public smart contract is deployed on the permissionless public blockchain. At 204, a private smart contract is instantiated on the permissioned blockchain. At 206, the private smart contract receives a join request including a transaction identification. The transaction identification identifies an enroll transaction involving the public smart contract deployed on the permissionless public blockchain. The enroll transaction identifies a permissioned blockchain public key being valid on the permissioned blockchain. The enroll transaction also transfers a cryptocurrency balance to the public smart contract.

At 208, the private smart contract verifies that the enroll transaction was properly executed. At 210, the private smart contract credits an account corresponding to the permissioned blockchain public key with the cryptocurrency balance. At 212, the private smart contract receives a send request identifying a second cryptocurrency balance and a second permissioned blockchain public key being valid on the permissioned blockchain, and transfers the second cryptocurrency balance from the account corresponding to the permissioned blockchain public key to a second account corresponding to the second permissioned blockchain public key.

At 214, the private smart contract receives a withdraw request identifying a permissionless blockchain public key, the withdraw request including a signature using a secret key of a public-private key pair corresponding to the second permissioned blockchain public key. At 216, the permissioned blockchain computes a proof including a third cryptocurrency balance corresponding to the amount of cryptocurrency then held by the second permissioned blockchain public key, the permissionless blockchain public key, and a signature of a valid quorum of nodes of the permissioned blockchain.

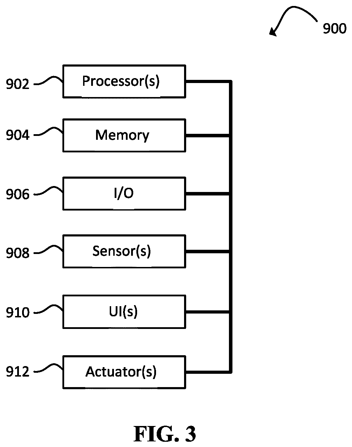

Referring to FIG. 3, a processing system 900 can include processing circuitry 902, memory 904, one or more input/output devices 906, one or more sensors 908, one or more user interfaces 910, and one or more actuators 912. Processing system 900 can be representative of each computing system disclosed herein.

Processing circuitry 902 can include one or more distinct processors, each having one or more cores. Each of the distinct processors can have the same or different structure. Processing circuitry 902 can include one or more central processing units (CPUs), one or more graphics processing units (GPUs), circuitry (e.g., application specific integrated circuits (ASICs)), digital signal processors (DSPs), and the like. Processing circuitry 902 can be mounted to a common substrate or to multiple different substrates.

Processing circuitry 902 is configured to perform a certain function, method, or operation (e.g., are configured to provide for performance of a function, method, or operation) at least when one of the processing circuitry is capable of performing operations embodying the function, method, or operation. Processing circuitry 902 can perform operations embodying the function, method, or operation by, for example, executing code (e.g., interpreting scripts) stored on memory 904 and/or trafficking data through one or more ASICs. Processing circuitry 902, and thus processing system 900, can be configured to perform, automatically, any and all functions, methods, and operations disclosed herein. Therefore, processing system 900 can be configured to implement any of (e.g., all of) the protocols, devices, mechanisms, systems, and methods described herein.

For example, when the present disclosure states that a method or device performs task "X" (or that task "X" is performed), such a statement should be understood to disclose that processing system 900 can be configured to perform task "X". Processing system 900 is configured to perform a function, method, or operation at least when processing circuitry 902 are configured to do the same.

Memory 904 can include volatile memory, non-volatile memory, and any other medium capable of storing data. Each of the volatile memory, non-volatile memory, and any other type of memory can include multiple different memory devices, located at multiple distinct locations and each having a different structure. Memory 904 can include remotely hosted (e.g., cloud) storage.

Examples of memory 904 include a non-transitory computer-readable media such as RAM, ROM, flash memory, EEPROM, any kind of optical storage disk such as a DVD, a Blu-Ray® disc, magnetic storage, holographic storage, a HDD, a SSD, any medium that can be used to store program code in the form of instructions or data structures, and the like. Any and all of the methods, functions, and operations described herein can be fully embodied in the form of tangible and/or non-transitory machine-readable code (e.g., interpretable scripts) saved in memory 904.

Input-output devices 906 can include any component for trafficking data such as ports, antennas (i.e., transceivers), printed conductive paths, and the like. Input-output devices 906 can enable wired communication via USB®, DisplayPort®, HDMI®, Ethernet, and the like. Input-output devices 906 can enable electronic, optical, magnetic, and holographic, communication with suitable memory 906. Input-output devices 906 can enable wireless communication via WiFi®, Bluetooth®, cellular (e.g., LTE®, CDMA®, GSM®, WiMax®, NFC®), GPS, and the like. Input-output devices 906 can include wired and/or wireless communication pathways.

Sensors 908 can capture physical measurements of environment and report the same to processors 902. User interface 910 can include displays, physical buttons, speakers, microphones, keyboards, and the like. Actuators 912 can enable processors 902 to control mechanical forces.

Processing system 900 can be distributed. For example, some components of processing system 900 can reside in a remote hosted network service (e.g., a cloud computing environment) while other components of processing system 900 can reside in a local computing system. Processing system 900 can have a modular design where certain modules include a plurality of the features/functions shown in FIG. 9. For example, I/O modules can include volatile memory and one or more processors. As another example, individual processor modules can include read-only-memory and/or local caches.

While subject matter of the present disclosure has been illustrated and described in detail in the drawings and foregoing description, such illustration and description are to be considered illustrative or exemplary and not restrictive. Any statement made herein characterizing the invention is also to be considered illustrative or exemplary and not restrictive as the invention is defined by the claims. It will be understood that changes and modifications may be made, by those of ordinary skill in the art, within the scope of the present disclosure, which may include any combination of features from different embodiments described above.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

**Claims**

1. A method for securing a cryptocurrency transaction on a permissioned blockchain, the cryptocurrency transaction involving cryptocurrencies of a permissionless public blockchain, the method comprising:
   performing, by a permissioned blockchain processing circuitry:

   receiving a join request including a transaction identification, the transaction identification identifying an enroll transaction involving a public smart contract deployed on the permissionless public blockchain, the enroll transaction identifying a permissioned blockchain public key being valid on the permissioned blockchain and transferring a cryptocurrency balance to the public smart contract;
   verifying that the enroll transaction was properly executed;
   crediting an account corresponding to the permissioned blockchain public key with the cryptocurrency balance; and
   receiving a send request identifying a second cryptocurrency balance and a second permissioned blockchain public key being valid on the permissioned blockchain; and
   transferring the second cryptocurrency balance from the account corresponding to the permissioned blockchain public key to a second account corresponding to the second permissioned blockchain public key,
   wherein the permissioned blockchain utilizes consensus protocols to generate Byzantine Fault Tolerance (BFT) proofs, and
   wherein the verifying that the enroll transaction was properly executed comprises invoking a simplified payment verification (SPV) client to retrieve information corresponding to the transaction identification.

2. The method according to claim 1, further comprising deploying, by the permissioned blockchain, the public smart contract in the permissionless public blockchain.

3. The method according to claim 2, wherein the SPV client is configured to request, from each of multiple public nodes of the permissionless public blockchain, a block header and a proof that the enroll transaction is included in the block header.

4. The method according to any of claims 1 to 3, wherein the enroll transaction includes a signature using a secret key of a public-private key pair corresponding to a permissionless blockchain public key corresponding to an account from which the cryptocurrency balance is transferred to the smart contract, and
   wherein the transaction identification is a hash of the enroll transaction.

5. The method according to any of claims 1 to 4, wherein the join request includes a signature using a secret key of a public-private key pair corresponding to the permissioned blockchain public key.

6. The method according to any of claims 1 to 5, wherein the send request includes a signature using a secret key of a public-private key pair corresponding to the permissioned blockchain public key.

7. The method according to any of claims 1 to 6, further comprising performing, by the permissioned blockchain processing circuitry:

   receiving a withdraw request identifying a permissionless blockchain public key, the withdraw request including a signature using a secret key of a public-private key pair corresponding to the second permissioned blockchain public key; and

computing a proof including a third cryptocurrency balance, the permissionless blockchain public key, and a signature of a valid quorum of nodes of the permissioned blockchain.

8. The method according to claim 7, wherein the proof is a Byzantine fault tolerance (BFT) proof.

9. The method according to claim 8, wherein the public smart contract is configured to evaluate the validity of the BFT proof.

10. The method according to claim 9, further comprising performing, by the permissioned blockchain processing circuitry: transmitting, to the public smart contract, BFT configuration parameters, the BFT configuration parameters being used by the public smart contract to evaluate the validity of the BFT proof.

11. The method according to claim 10, further comprising performing, by the permissioned blockchain processing circuitry:
updating the BFT configuration parameters in response to an increase or decrease in a total number of nodes of the permissioned blockchain and/or a number of nodes of the permissioned blockchain required for a quorum.

12. The method according to claim 11, wherein the updating the BFT configuration parameters includes transmitting, to the public smart contract, a cryptographic accumulator that includes a set of currently valid keys of all nodes of the permissioned blockchain, wherein the cryptographic accumulator is signed by a valid quorum of nodes of a previous configuration of the permissioned blockchain, and/or
wherein a trusted execution environment (TEE) is configured to evaluate the validity of the BFT proof and wherein the public smart contract is configured to verify the enroll transaction.

13. A non-transitory processor readable medium having stored thereon processor executable instructions for securing a cryptocurrency transaction on a permissioned blockchain, the cryptocurrency transaction involving cryptocurrencies of a permissionless public blockchain, the method comprising:

receiving a join request including a transaction identification, the transaction identification identifying an enroll transaction involving a public smart contract deployed on the permissionless public blockchain, the enroll transaction identifying a permissioned blockchain public key being valid on the permissioned blockchain and transferring a cryptocurrency balance to the public smart contract;
verifying that the enroll transaction was properly executed;
crediting an account corresponding to the permissioned blockchain public key with the cryptocurrency balance; and
receiving a send request identifying a second cryptocurrency balance and a second permissioned blockchain public key being valid on the permissioned blockchain; and
transferring the second cryptocurrency balance from the account corresponding to the permissioned blockchain public key to a second account corresponding to the second permissioned blockchain public key,
wherein the permissioned blockchain utilizes consensus protocols to generate Byzantine Fault Tolerance (BFT) proofs, and
wherein the verifying that the enroll transaction was properly executed comprises invoking a simplified payment verification (SPV) client to retrieve information corresponding to the transaction identification.

14. A system for securing a cryptocurrency transaction on a permissioned blockchain, the cryptocurrency transaction involving cryptocurrencies of a permissionless public blockchain, the system comprising:
processor circuitry configured to:

receive a join request including a transaction identification, the transaction identification identifying an enroll transaction involving a public smart contract deployed on the permissionless public blockchain, the enroll transaction identifying a permissioned blockchain public key being valid on the permissioned blockchain and transferring a cryptocurrency balance to the public smart contract;
verify that the enroll transaction was properly executed;
credit an account corresponding to the permissioned blockchain public key with the cryptocurrency balance;
receive a send request identifying a second cryptocurrency balance and a second permissioned blockchain public key being valid on the permissioned blockchain; and

transfer the second cryptocurrency balance from the account corresponding to the permissioned blockchain public key to a second account corresponding to the second permissioned blockchain public key,
wherein the permissioned blockchain utilizes consensus protocols to generate Byzantine Fault Tolerance (BFT) proofs, and
wherein the verifying that the enroll transaction was properly executed comprises invoking a simplified payment verification (SPV) client to retrieve information corresponding to the transaction identification.

**Patentansprüche**

1. Verfahren zum Sichern einer Kryptowährungstransaktion auf einer erlaubnispflichtigen (permissioned) Blockchain, wobei die Kryptowährungstransaktion Kryptowährungen einer erlaubnisfreien (permissionless) öffentlichen Blockchain einbezieht, wobei das Verfahren umfasst:
Durchführen, durch eine Verarbeitungsschaltung der erlaubnispflichtigen Blockchain:

   Empfangen einer Beitrittsanforderung, die eine Transaktionsidentifikation enthält, wobei die Transaktionsidentifikation eine Anmeldetransaktion identifiziert, die einen öffentlichen Smart-Contract einbezieht, der auf der erlaubnisfreien öffentlichen Blockchain eingesetzt wird, wobei die Anmeldetransaktion einen öffentlichen Schlüssel der erlaubnispflichtigen Blockchain identifiziert, der auf der erlaubnispflichtigen Blockchain gültig ist, und ein Kryptowährungssaldo an den öffentlichen Smart-Contract überträgt;
   Verifizieren, dass die Anmeldetransaktion ordnungsgemäß ausgeführt wurde;
   Gutschreiben des Kryptowährungssaldos auf ein Konto, das dem öffentlichen Schlüssel der erlaubnispflichtigen Blockchain entspricht; und
   Empfangen einer Sendeanforderung, die einen zweiten Kryptowährungssaldo und einen zweiten öffentlichen Schlüssel der erlaubnispflichtigen Blockchain identifiziert, der auf der erlaubnispflichtigen Blockchain gültig ist; und
   Übertragen des zweiten Kryptowährungssaldos von dem Konto, das dem öffentlichen Schlüssel der erlaubnispflichtigen Blockchain entspricht, auf ein zweites Konto, das dem zweiten öffentlichen Schlüssel der erlaubnispflichtigen Blockchain entspricht,
   wobei die erlaubnispflichtige Blockchain Konsensprotokolle verwendet, um Byzantinische Fehlertoleranz (BFT)-Beweise zu erzeugen, und
   wobei das Verifizieren, dass die Anmeldetransaktion ordnungsgemäß ausgeführt wurde, das Aufrufen eines Clients für eine vereinfachte Zahlungsverifizierung (SPV) umfasst, um Informationen abzurufen, die der Transaktionsidentifikation entsprechen.

2. Verfahren nach Anspruch 1, weiterhin umfassend das Bereitstellen des öffentlichen Smart-Contracts in der erlaubnisfreien öffentlichen Blockchain durch die erlaubnispflichtige Blockchain.

3. Verfahren nach Anspruch 2, wobei der SPV-Client so konfiguriert ist, dass er von jedem von mehreren öffentlichen Knoten der erlaubnisfreien öffentlichen Blockchain einen Block-Header und einen Beweis dafür anfordert, dass die Anmeldetransaktion in dem Block-Header enthalten ist.

4. Verfahren nach einem der Ansprüche 1 bis 3, wobei die Anmeldetransaktion eine Signatur enthält, die einen geheimen Schlüssel eines öffentlich-privaten Schlüsselpaars verwendet, das einem öffentlichen Schlüssel der erlaubnisfreien Blockchainentspricht, der einem Konto entspricht, von dem das Kryptowährungssaldo an den Smart Contract übertragen wird, und
wobei die Transaktionsidentifikation ein Hash der Anmeldetransaktion ist.

5. Verfahren nach einem der Ansprüche 1 bis 4, wobei die Beitrittsanforderung eine Signatur enthält, die einen geheimen Schlüssel eines öffentlich-privaten Schlüsselpaares verwendet, das dem öffentlichen Schlüssel der erlaubnispflichtigen Blockchain entspricht.

6. Verfahren nach einem der Ansprüche 1 bis 5, wobei die Sendeanforderung eine Signatur enthält, die einen geheimen Schlüssel eines öffentlich-privaten Schlüsselpaares verwendet, das dem öffentlichen Schlüssel der erlaubnispflichtigen Blockchain entspricht.

7. Verfahren nach einem der Ansprüche 1 bis 6, weiterhin umfassend, dass die Verarbeitungsschaltung der erlaubnispflichtigen Blockchain folgendes durchführt:

Empfangen einer Abhebungsanforderung, die einen öffentlichen Schlüssel der erlaubnisfreien Blockchain identifiziert, wobei die Abhebungsanforderung eine Signatur enthält, die einen geheimen Schlüssel eines öffentlich-privaten Schlüsselpaares verwendet, das dem zweiten öffentlichen Schlüssel der erlaubnispflichtigen Blockchain entspricht; und

Berechnen eines Beweises, der ein drittes Kryptowährungssaldo, den öffentlichen Schlüssel der erlaubnisfreien Blockchain und eine Signatur eines gültigen Quorums von Knoten der erlaubnispflichtigen Blockchain enthält.

8. Verfahren nach Anspruch 7, wobei der Beweis ein Byzantinischer Fehlertoleranz (BFT)-Beweis ist.

9. Verfahren nach Anspruch 8, wobei der öffentliche Smart-Contract so konfiguriert ist, dass er die Gültigkeit des BFT-Beweises bewertet.

10. Verfahren nach Anspruch 9, weiterhin umfassend, dass die Verarbeitungsschaltung der erlaubnispflichtigen Blockchain Folgendes durchführt:
Übertragen von BFT-Konfigurationsparametern an den öffentlichen Smart-Contract, wobei die BFT-Konfigurationsparameter von dem öffentlichen Smart-Contract verwendet werden, um die Gültigkeit des BFT-Beweises zu bewerten.

11. Verfahren nach Anspruch 10, weiterhin umfassend, dass die Verarbeitungsschaltung für die erlaubnispflichtige Blockchain Folgendes durchführt:
Aktualisieren der BFT-Konfigurationsparameter als Reaktion auf eine Erhöhung oder Verringerung einer Gesamtzahl von Knoten der erlaubnispflichtigen Blockchain und/oder einer Anzahl von Knoten der erlaubnispflichtigen Blockchain, die für ein Quorum erforderlich sind.

12. Verfahren nach Anspruch 11, wobei das Aktualisieren der BFT-Konfigurationsparameter das Übertragen eines kryptographischen Akkumulators an den öffentlichen Smart-Contract umfasst, der einen Satz aktuell gültiger Schlüssel aller Knoten der erlaubnispflichtigen Blockchain enthält, wobei der kryptographische Akkumulator von einem gültigen Quorum von Knoten einer vorherigen Konfiguration der erlaubnispflichtigen Blockchain signiert ist, und/oder
wobei eine vertrauenswürdige Ausführungsumgebung (Trusted Execution Environment, TEE) so konfiguriert ist, dass sie die Gültigkeit des BFT-Beweises bewertet, und wobei der öffentliche Smart-Contract so konfiguriert ist, dass er die Anmeldetransaktion verifiziert.

13. Nicht-transitorisches, prozessorlesbares Medium, auf dem prozessorausführbare Anweisungen gespeichert sind, um eine Kryptowährungtransaktion auf einer erlaubnispflichtigen Blockchain zu sichern, wobei die Kryptowährungtransaktion Kryptowährungen einer erlaubnisfreien öffentlichen Blockchain einbezieht, wobei das Verfahren umfasst:

Empfangen einer Beitrittsanforderung, die eine Transaktionsidentifikation enthält, wobei die Transaktionsidentifikation eine Anmeldetransaktion identifiziert, die einen öffentlichen Smart-Contract einbezieht, der auf der erlaubnisfreien öffentlichen Blockchain eingesetzt wird, wobei die Anmeldetransaktion einen öffentlichen Schlüssel der erlaubnispflichtigen Blockchain identifiziert, der auf der erlaubnispflichtigen Blockchain gültig ist, und einen Kryptowährungssaldo an den öffentlichen Smart-Contract überträgt;
Verifizieren, dass die Anmeldetransaktion ordnungsgemäß ausgeführt wurde;
Gutschreiben des Kryptowährungssaldos auf ein Konto, das dem öffentlichen Schlüssel der erlaubnispflichtigen Blockchain entspricht; und
Empfangen einer Sendeanforderung, die einen zweiten Kryptowährungssaldo und einen zweiten öffentlichen Schlüssel der erlaubnispflichtigen Blockchain identifiziert, der auf der erlaubnispflichtigen Blockchain gültig ist; und
Übertragen des zweiten Kryptowährungssaldos von dem Konto, das dem öffentlichen Schlüssel der erlaubnispflichtigen Blockchain entspricht, auf ein zweites Konto, das dem zweiten öffentlichen Schlüssel der erlaubnispflichtigen Blockchain entspricht,
wobei die erlaubnispflichtige Blockchain Konsensprotokolle verwendet, um Byzantinische Fehlertoleranz (BFT)-Beweise zu erzeugen, und
wobei das Verifizieren, dass die Anmeldetransaktion ordnungsgemäß ausgeführt wurde, das Aufrufen eines Clients für eine vereinfachte Zahlungsverifizierung (SPV) umfasst, um Informationen abzurufen, die der Transaktionsidentifikation entsprechen.

**14.** System zum Sichern einer Kryptowährungstransaktion auf einer erlaubnispflichtigen Blockchain, wobei die Kryptowährungstransaktion Kryptowährungen einer erlaubnisfreien öffentlichen Blockchain einbezieht, wobei das System umfasst:

Prozessorschaltungen, die konfiguriert sind, um:

eine Beitrittsanforderung zu empfangen, die eine Transaktionsidentifikation enthält, wobei die Transaktionsidentifikation eine Anmeldetransaktion identifiziert, die einen öffentlichen Smart-Contract einbezieht, der auf der erlaubnisfreien öffentlichen Blockchain eingesetzt wird, wobei die Anmeldetransaktion einen öffentlichen Schlüssel der erlaubnispflichtigen Blockchain identifiziert, der auf der erlaubnispflichtigen Blockchain gültig ist, und einen Kryptowährungssaldo an den öffentlichen Smart-Contract überträgt;

Verifizieren, dass die Anmeldetransaktion ordnungsgemäß ausgeführt wurde;

Gutschreiben des Kryptowährungssaldos auf ein Konto, das dem öffentlichen Schlüssel der erlaubnispflichtigen Blockchain entspricht;

Empfangen einer Sendeanforderung, die einen zweiten Kryptowährungssaldo und einen zweiten öffentlichen Schlüssel der erlaubnispflichtigen Blockchain identifiziert, der auf der erlaubnispflichtigen Blockchain gültig ist; und

Übertragen des zweiten Kryptowährungssaldos von dem Konto, das dem öffentlichen Schlüssel der erlaubnispflichtigen Blockchain entspricht, auf ein zweites Konto, das dem zweiten öffentlichen Schlüssel der erlaubnispflichtigen Blockchain entspricht,

wobei die erlaubnispflichtige Blockchain Konsensprotokolle verwendet, um Byzantinische Fehlertoleranz (BFT)-Beweise zu erzeugen, und

wobei das Verifizieren, dass die Anmeldetransaktion ordnungsgemäß ausgeführt wurde, das Aufrufen eines Clients für eine vereinfachte Zahlungsverifizierung (SPV) umfasst, um Informationen abzurufen, die der Transaktionsidentifikation entsprechen.

## Revendications

**1.** Procédé de sécurisation d'une transaction de cryptomonnaie sur une chaîne de blocs autorisée, la transaction de cryptomonnaie impliquant des cryptomonnaies d'une chaîne de blocs publique sans autorisation, le procédé comprenant :

la réalisation, par une circuiterie de traitement de chaîne de blocs autorisée :

la réception d'une requête de jonction comportant une identification de transaction, l'identification de transaction identifiant une transaction d'inscription impliquant un contrat intelligent public déployé sur la chaîne de blocs publique sans autorisation, la transaction d'inscription identifiant une clé publique de chaîne de blocs autorisée qui est valide sur la chaîne de blocs autorisée et transférant un solde de cryptomonnaie vers le contrat intelligent public ;

la vérification que la transaction d'inscription a été correctement exécutée ;

le fait de créditer un compte correspondant à la clé publique de chaîne de blocs autorisée avec le solde de cryptomonnaie ; et

la réception d'une requête d'envoi identifiant un deuxième solde de cryptomonnaie et une deuxième clé publique de chaîne de blocs autorisée qui est valide sur la chaîne de blocs autorisée ; et

le transfert du deuxième solde de cryptomonnaie, du compte correspondant à la clé publique de chaîne de blocs autorisée à un deuxième compte correspondant à la deuxième clé publique de chaîne de blocs autorisée,

dans lequel la chaîne de blocs autorisée utilise des protocoles de consensus pour générer des preuves de tolérance aux fautes byzantines (BFT), et

dans lequel la vérification que la transaction d'inscription a été correctement exécutée comprend l'invocation d'un client de vérification simplifiée de paiement (SPV) pour récupérer des informations correspondant à l'identification de transaction.

**2.** Procédé selon la revendication 1, comprenant en outre le déploiement, par la chaîne de blocs autorisée, du contrat intelligent public dans la chaîne de blocs publique sans autorisation.

**3.** Procédé selon la revendication 2, dans lequel le client de SPV est configuré pour requérir, auprès de chacun parmi de multiples nœuds publics de la chaîne de blocs publique sans autorisation, un en-tête de bloc et une preuve que la transaction d'inscription est comprise dans l'en-tête de bloc.

4. Procédé selon l'une quelconque des revendications 1 à 3, dans lequel la transaction d'inscription comporte une signature utilisant une clé secrète d'une paire de clés publique-privée correspondant à une clé publique de chaîne de blocs sans autorisation correspondant à un compte à partir duquel le solde de cryptomonnaie est transféré au contrat intelligent, et
dans lequel l'identification de transaction est un hachage de la transaction d'inscription.

5. Procédé selon l'une quelconque des revendications 1 à 4, dans lequel la requête de jonction comporte une signature utilisant une clé secrète d'une paire de clés publique-privée correspondant à la clé publique de chaîne de blocs autorisée.

6. Procédé selon l'une quelconque des revendications 1 à 5, dans lequel la requête d'envoi comporte une signature utilisant une clé secrète d'une paire de clés publique-privée correspondant à la clé publique de chaîne de blocs autorisée.

7. Procédé selon l'une quelconque des revendications 1 à 6, comprenant en outre la réalisation, par la circuiterie de traitement de chaîne de blocs autorisée :

la réception d'une requête de retrait identifiant une clé publique de chaîne de blocs sans autorisation, la requête de retrait comportant une signature utilisant une clé secrète d'une paire de clés publique-privée correspondant à la deuxième clé publique de chaîne de blocs autorisée ; et
le calcul d'une preuve comportant un troisième solde de cryptomonnaie, la clé publique de chaîne de blocs sans autorisation et une signature d'un quorum valide de nœuds de la chaîne de blocs autorisée.

8. Procédé selon la revendication 7, dans lequel la preuve est une preuve de tolérance aux fautes byzantines (BFT).

9. Procédé selon la revendication 8, dans lequel le contrat intelligent public est configuré pour évaluer la validité de la preuve de BFT.

10. Procédé selon la revendication 9, comprenant en outre la réalisation, par la circuiterie de traitement de chaîne de blocs autorisée :
l'émission, vers le contrat intelligent public, de paramètres de configuration de BFT, les paramètres de configuration de BFT étant utilisés par le contrat intelligent public pour évaluer la validité de la preuve de BFT.

11. Procédé selon la revendication 10, comprenant en outre la réalisation, par la circuiterie de traitement de chaîne de blocs autorisée :
la mise à jour des paramètres de configuration de BFT en réponse à une augmentation ou une diminution d'un nombre total de nœuds de la chaîne de blocs autorisée et/ou d'un nombre de nœuds de la chaîne de blocs autorisée requis pour un quorum.

12. Procédé selon la revendication 11, dans lequel la mise à jour des paramètres de configuration de BFT comporte l'émission, vers le contrat intelligent public, d'un accumulateur cryptographique qui comporte un jeu de clés actuellement valides de tous les nœuds de la chaîne de blocs autorisée, dans lequel l'accumulateur cryptographique est signé par un quorum valide de nœuds d'une configuration précédente de la chaîne de blocs autorisée, et/ou dans lequel un environnement d'exécution de confiance (TEE) est configuré pour évaluer la validité de la preuve de BFT et dans lequel le contrat intelligent public est configuré pour vérifier la transaction d'inscription.

13. Support non transitoire lisible par processeur ayant, stocké sur celui-ci, des instructions exécutables par processeur pour la sécurisation d'une transaction de cryptomonnaie sur une chaîne de blocs autorisée, la transaction de cryptomonnaie impliquant des cryptomonnaies d'une chaîne de blocs publique sans autorisation, le procédé comprenant :

la réception d'une requête de jonction comportant une identification de transaction, l'identification de transaction identifiant une transaction d'inscription impliquant un contrat intelligent public déployé sur la chaîne de blocs publique sans autorisation, la transaction d'inscription identifiant une clé publique de chaîne de blocs autorisée qui est valide sur la chaîne de blocs autorisée et transférant un solde de cryptomonnaie vers le contrat intelligent public ;
la vérification que la transaction d'inscription a été correctement exécutée ;
le fait de créditer un compte correspondant à la clé publique de chaîne de blocs autorisée avec le solde de cryptomonnaie ; et

la réception d'une requête d'envoi identifiant un deuxième solde de cryptomonnaie et une deuxième clé publique de chaîne de blocs autorisée qui est valide sur la chaîne de blocs autorisée ; et

le transfert du deuxième solde de cryptomonnaie, du compte correspondant à la clé publique de chaîne de blocs autorisée à un deuxième compte correspondant à la deuxième clé publique de chaîne de blocs autorisée, dans lequel la chaîne de blocs autorisée utilise des protocoles de consensus pour générer des preuves de tolérance aux fautes byzantines (BFT), et

dans lequel la vérification que la transaction d'inscription a été correctement exécutée comprend l'invocation d'un client de vérification simplifiée de paiement (SPV) pour récupérer des informations correspondant à l'identification de transaction.

14. Système de sécurisation d'une transaction de cryptomonnaie sur une chaîne de blocs autorisée, la transaction de cryptomonnaie impliquant des cryptomonnaies d'une chaîne de blocs publique sans autorisation, le système comprenant :

une circuiterie de processeur configurée pour :

recevoir une requête de jonction comportant une identification de transaction, l'identification de transaction identifiant une transaction d'inscription impliquant un contrat intelligent public déployé sur la chaîne de blocs publique sans autorisation, la transaction d'inscription identifiant une clé publique de chaîne de blocs autorisée qui est valide sur la chaîne de blocs autorisée et transférant un solde de cryptomonnaie vers le contrat intelligent public ;

vérifier que la transaction d'inscription a été correctement exécutée ;

créditer un compte correspondant à la clé publique de chaîne de blocs autorisée avec le solde de cryptomonnaie ;

recevoir une requête d'envoi identifiant un deuxième solde de cryptomonnaie et une deuxième clé publique de chaîne de blocs autorisée qui est valide sur la chaîne de blocs autorisée ; et

transférer le deuxième solde de cryptomonnaie, du compte correspondant à la clé publique de chaîne de blocs autorisée à un deuxième compte correspondant à la deuxième clé publique de chaîne de blocs autorisée, dans lequel la chaîne de blocs autorisée utilise des protocoles de consensus pour générer des preuves de tolérance aux fautes byzantines (BFT), et

dans lequel la vérification que la transaction d'inscription a été correctement exécutée comprend l'invocation d'un client de vérification simplifiée de paiement (SPV) pour récupérer des informations correspondant à l'identification de transaction.

**FIG. 1**

Deploy public smart contract on permissionless public blockchain ⟋202

Instantiate private smart contract on permissioned blockchain ⟋204

Receive join request including transaction identification identifying enroll transaction ⟋206

Verify enroll transaction was properly executed ⟋208

Credit account with crypto balance identified in enroll transaction ⟋210

Receive send request and transfer corresponding balance ⟋212

Receive withdraw request identifying public blockchain address ⟋214

Compute proof with signature of quorum of nodes of permissioned blockchain ⟋216

## FIG. 2

**FIG. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAS POULAMI et al.** FASTKITTEN: Practical Smart Contracts on Bitcoin. *USENIX security symposium*, 14 August 2019
- **DZIEMBOWSKI STEFAN et al.** General State Channel Networks. *IEEE/ACM intl. conference on connected health*, October 2018

- **WÜST KARL et al.** Bitcontracts: Supporting Smart Contracts in Legacy Blockchains. *NDSS*, February 2021